**Europäisches Patentamt**

**European Patent Office**

**Office européen des brevets**

(19)

(11) Numéro de publication : **0 054 446**
**B1**

(12)

# FASCICULE DE BREVET EUROPÉEN

(45) Date de publication du fascicule du brevet :
**25.07.84**

(51) Int. Cl.³ : **H 02 P   5/40,** H 02 P   1/44

(21) Numéro de dépôt : **81401755.4**

(22) Date de dépôt : **30.10.81**

(54) **Moteur électrique asynchrone, dispositif de commande de l'alimentation d'un tel moteur, et circulateur comportant un tel moteur.**

(30) Priorité : **09.12.80 FR 8026077**

(43) Date de publication de la demande :
**23.06.82 Bulletin 82/25**

(45) Mention de la délivrance du brevet :
**25.07.84 Bulletin 84/30**

(84) Etats contractants désignés :
**BE DE GB IT NL**

(56) Documents cités :
**FR-A- 2 042 259**
**US-A- 3 624 470**
**US-A- 4 196 462**

(73) Titulaire : **SOCIETE ELECTRO-HYDRAULIQUE (S.E.H.)**
**Société anonyme**
**173 Boulevard Haussmann**
**Paris 8ème (FR)**

(72) Inventeur : **Busson, Gérard**
**THOMSON-CSF SCPI 173, bld Haussmann**
**F-75360 Paris Cedex 08 (FR)**
Inventeur : **Kernours, Michel**
**THOMSON-CSF SCPI 173, bld Haussmann**
**F-75360 Paris Cedex 08 (FR)**

(74) Mandataire : **Grynwald, Albert et al**
**THOMSON-CSF SCPI 173, Bld Haussmann**
**F-75379 Paris Cedex 08 (FR)**

Jouve, 18, rue St-Denis, 75001 Paris, France

## Description

L'invention est relative à un moteur électrique asynchrone monophasé muni d'un bobinage auxiliaire de démarrage en série avec un condensateur, à un dispositif de commande de la vitesse d'un tel moteur et à un circulateur d'installation de chauffage central comprenant un moteur de ce type pour entraîner la pompe de commande de la circulation de l'eau.

On sait que, pour un couple résistant de valeur déterminée, la vitesse d'un moteur asynchrone ne dépend que de la puissance fournie à ce moteur. C'est pourquoi on a déjà proposé de faire varier la vitesse par modification de la puissance d'alimentation de ce moteur, par exemple à l'aide d'un rhéostat en série avec le réseau alternatif.

Mais au démarrage — ou lorsque le couple résistant augmente, entraînant ainsi un ralentissement du moteur — il est nécessaire de fournir de façon momentanée une puissance plus importante. A cet effet, il est connu de faire intervenir un relais qui court-circuite le rhéostat de façon à fournir la puissance maximale au démarrage ou lorsque la vitesse du moteur est trop faible. Ce relais est monté de façon à être sensible à l'intensité du courant traversant la phase auxiliaire constituée par le bobinage auxiliaire et le condensateur en série ; en effet plus la vitesse du moteur s'approche de la vitesse de synchronisme plus l'intensité du courant traversant cette phase est élevée. Mais le montage connu est tel que le relais consomme inutilement de l'énergie électrique et qu'il ne permet pas une régulation satisfaisante de la vitesse.

Il est également connu (brevet français 2 042 259) d'alimenter le moteur par une alimentation à découpage dont le temps de conduction de l'interrupteur varie en fonction du signal fourni par une génératrice tachymétrique. Ce montage connu est complexe et onéreux.

L'invention telle qu'elle est énoncée à la revendication 1 remédie à ces inconvénients.

Pour la commande de l'alimentation d'un moteur asynchrone monophasé l'invention fait appel à une alimentation à découpage à interrupteur commandé dont le temps de conduction de l'interrupteur électronique est fonction de la vitesse du moteur. Pour la mesure de la vitesse, on utilise la tension aux bornes du condensateur ou la tension aux bornes du bobinage auxiliaire (cette propriété que présente la tension aux bornes du bobinage auxiliaire de dépendre de la vitesse est déjà connue par exemple par les brevets US 3 624 470 et 4 196 462). Ce signal est utilisé pour agir sur un ensemble constitué d'une résistance en série avec un condensateur, l'ensemble étant en parallèle sur l'interrupteur commandé, tel qu'un triac, et le point commun à cette résistance et à ce condensateur étant relié à la gâchette de l'interrupteur par l'intermédiaire d'un diac. Ledit moyen peut agir sur la valeur de ladite résistance ou directement sur ladite gâchette.

L'énergie électrique fournie au moteur peut donc être juste celle nécessaire à son fonctionnement et il est possible d'obtenir une régulation satisfaisante et particulièrement économique de la vitesse du moteur.

Dans un mode de réalisation de l'invention, spécialement adapté à la commande de l'alimentation d'un moteur d'entraînement d'une pompe de circulation de l'eau d'une installation de chauffage central, le circuit de commande est tel que, lorsque la vitesse est au-dessous d'un seuil déterminé, des moyens sont prévus pour alimenter le moteur à puissance maximale pendant un temps t prédéterminé, par exemple de l'ordre de quelques secondes, et est ensuite alimenté à la puissance affichée. De cette manière le moteur est alimenté à puissance maximale au démarrage pendant le temps t. Si, lorsque le moteur tourne, la vitesse diminue, du fait de l'augmentation du couple résistant dû à l'entartrage de la pompe, le moteur est de nouveau alimenté à puissance maximale pendant ce temps t. L'alimentation à puissance maximale permet d'enlever le tartre qui provoque l'augmentation excessive du couple résistant. On obtient ainsi un « dégommage » automatique.

D'autres caractéristiques de l'invention apparaîtront avec la description de certains de ses modes de réalisation, celle-ci étant effectuée en liaison avec les dessins ci-annexés sur lesquels :

la figure 1   est un schéma d'un moteur, de son alimentation, et de son circuit de commande selon l'invention, et

la figure 2   est une variante de la figure 1.

Dans les exemples les moteurs sont destinés à l'entraînement de pompes de circulation d'eau dans une installation de chauffage central.

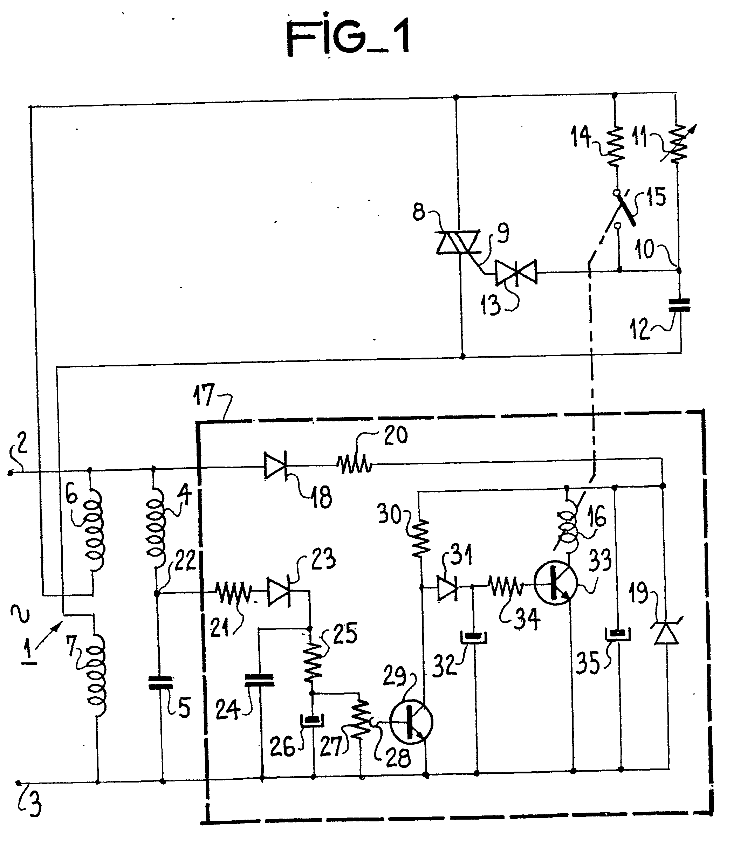

Le moteur (figure 1) comprend un enroulement statorique principal 1, alimenté en courant électrique monophasé par le secteur grâce à deux conducteurs 2 et 3.

L'ensemble en série d'un bobinage (ou enroulement) statorique auxiliaire 4 et d'un condensateur est disposé en permanence en parallèle sur l'enroulement, ou bobinage, principal 1. On sait en effet qu'un bobinage alimenté en courant alternatif monophasé crée deux champs magnétiques tournants qui s'opposent et ne peuvent donc faire tourner le rotor lorsque celui-ci est à l'arrêt. C'est seulement lorsque le rotor commence à tourner que le champ s'exerçant sur ce rotor (non représenté) a un effet non nul. L'ensemble formé par le bobinage statorique auxiliaire 4 et le condensateur 5 vise, de façon en soi connue, à permettre le démarrage du moteur asynchrone monophasé par création d'un champ tournant résultant non nul lorsque le rotor est à l'arrêt.

Dans l'exemple de la figure 1, et comme déjà décrit dans la demande de brevet européen n° 81 401 074.0 du 3 juillet 1981 pour « MOTEUR ASYNCHRONE MONOPHASE ET DISPOSITIF DE COMMANDE D'UN TEL MOTEUR » (état de la technique selon l'Article 54(3) CBE, publié par EP-A2-44244) au nom de la demanderesse, l'enroulement principal 1 est formé de deux demi-enroulements 6 et 7 entre lesquels est interposé un triac 8 formant l'interrupteur électronique d'une alimentation à découpage. Ainsi une borne du demi-enroulement 6 est connectée directement à la ligne 2, la borne opposée est reliée à une borne du demi-enroulement 7 par l'intermédiaire du triac 8 et la borne opposée de ce demi-enroulement 7 est reliée au conducteur 3. Cette disposition à deux demi-enroulements empêche la transmission vers le réseau des signaux parasites provoqués par les changements d'état de conduction du triac.

La gâchette 9 du triac est reliée à la borne commune 10 à une résistance variable 11 et un condensateur 12 par l'intermédiaire d'un diac 13. L'ensemble en série de la résistance variable 11 et du condensateur 12 est en parallèle sur le triac 8. La valeur de la résistance 11 dépend de la vitesse désirée pour le moteur. On peut ainsi afficher une vitesse quelconque par le choix de la valeur de la résistance 11.

- Selon une disposition de l'invention, en parallèle sur la résistance variable 11 est disposé l'ensemble en série d'une résistance 14, de valeur nettement inférieure à celle de la résistance 11, et d'un interrupteur commandé 15 tel qu'un relais.

L'interrupteur 15 est fermé quand on désire alimenter le moteur à sa puissance maximale. A cet effet, la bobine 16 de ce relais est disposée dans un circuit 17 de commande de la vitesse.

L'énergie nécessaire au fonctionnement du circuit 17 est obtenue par redressement du courant fourni par le secteur. A cet effet, l'anode d'une diode 18 est reliée au conducteur 2 tandis que la cathode de cette diode est connectée à la cathode d'une diode Zener 19 dont l'anode est reliée au conducteur 3. Un condensateur de filtrage 35 est en parallèle sur la diode Zener 19.

La vitesse du moteur est détectée par surveillance de la tension aux bornes du condensateur 5. Le circuit 17 comprend donc une résistance 21 reliée, d'un côté, au point commun 22 à l'enroulement 4 et au condensateur 5 et de l'autre côté à l'anode d'une diode 23 dont la cathode est connectée au conducteur 3 par l'intermédiaire d'un condensateur 24. L'ensemble en série d'une résistance 25 et d'un condensateur 26 est en parallèle sur le condensateur 24.

En parallèle sur le condensateur 26 est disposée la résistance totale d'un potentiomètre 27 dont la prise ou curseur 28 est reliée à la base d'un transistor 29 de type NPN dont l'émetteur est relié au conducteur 3. Le collecteur du transistor 29 est connecté à la cathode de la diode Zener 19 par l'intermédiaire d'une résistance 30. Ce collecteur est également relié à l'anode d'une diode 31 dont la cathode est reliée à l'émetteur du transistor 29 par l'intermédiaire d'un condensateur 32 ainsi qu'à la base d'un autre transistor NPN 33 par l'intermédiaire d'une résistance 34.

Une borne de la bobine 16 du relais est reliée à la cathode de la diode Zener 19 et son autre borne est connectée au collecteur du transistor 33 dont l'émetteur est relié au conducteur 3.

Le fonctionnement est le suivant :

Au démarrage du moteur le potentiel de la base du transistor 33 est supérieur au potentiel de son émetteur et ce transistor 33 est conducteur. Ainsi la bobine 16 du relais est alimentée en courant continu et l'interrupteur 15 est fermé. Le moteur est donc alimenté à la puissance maximale.

Après le démarrage, le condensateur 5 se charge et cette charge est transmise aux condensateurs 24 et 26. La charge du condensateur 26 est retardée par la présence des résistances 21 et 25. Lorsque le condensateur 26 est chargé le potentiel du curseur 28 est supérieur au potentiel de l'émetteur du transistor 29 et celui-ci devient donc conducteur. Dans ces conditions le potentiel du collecteur de ce transistor 29 et celui de l'anode de la diode 31 est pratiquement égal au potentiel du conducteur 3 et ainsi le potentiel de la base du transistor 33 diminue. Pour cette raison ce dernier se bloque, éventuellement après décharge du condensateur 32 à travers la jonction base-émetteur dudit transistor 33. Il en résulte que la bobine 16 du relais n'est plus alimentée et l'interrupteur 15 s'ouvre. La puissance d'alimentation, et donc la vitesse, est alors déterminée par la valeur de la résistance 11.

Ainsi, au démarrage, l'interrupteur 15 est fermé et le moteur est alimenté à puissance maximale et, après un temps t de l'ordre de quelques secondes, l'interrupteur 15 s'ouvre et la puissance d'alimentation correspond alors à celle nécessaire pour obtenir la vitesse désirée.

Si la vitesse du moteur diminue la tension aux bornes du condensateur 5 diminue. Il en résulte également une chute de la tension aux bornes du condensateur 26 et le blocage du transistor 29 ce qui permet, après la charge du condensateur 32, de ramener le transistor 33 à l'état conducteur et ainsi de fermer l'interrupteur 15.

Ainsi la puissance maximale sera fournie au moteur tant que sa vitesse de rotation sera insuffisante.

Le seuil en dessous duquel doit tomber la vitesse de rotation du moteur pour que lui soit fourni sa puissance maximale d'alimentation est déterminé par la position du curseur 28 du potentiomètre 27.

La temporisation, c'est-à-dire l'alimentation du moteur à sa puissance maximale pendant le temps t, de l'ordre de quelques secondes, empêche les déclenchements trop fréquents du relais 15 et assure donc un asservissement satisfaisant.

A la place du relais 15 et de sa bobine de commande 16 on peut prévoir un dispositif optoélectronique.

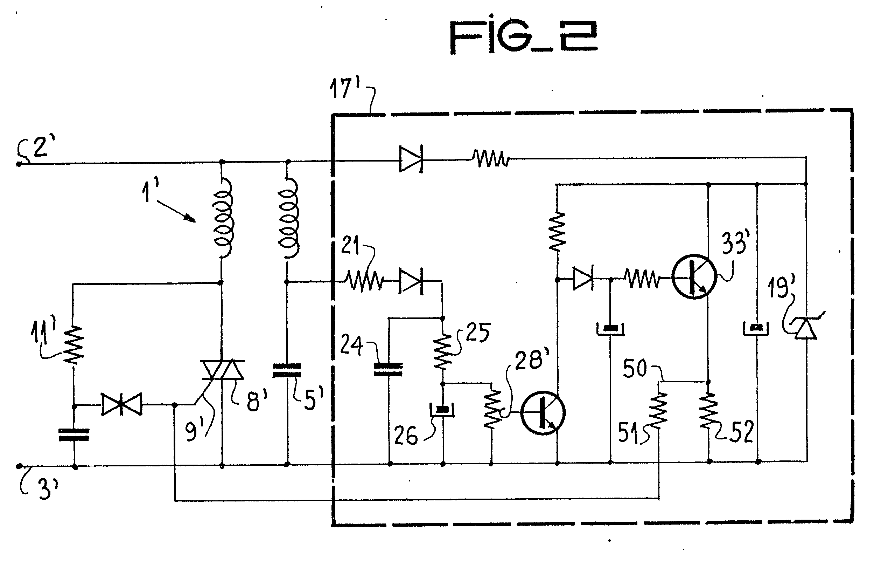

L'exemple de la figure 2 se distingue de celui décrit en relation avec la figure 1 par les dispositions suivantes :

L'enroulement 1' est d'un seul tenant, le triac 8' étant interposé entre une borne de cet enroulement et le conducteur 3'.

On ne prévoit pas de résistance et d'interrupteur en parallèle sur la résistance variable 11' mais, à la place, une connexion 50 entre l'émetteur du transistor 33' et la gâchette 9' du triac 8'. En outre, une résistance 51 et disposée dans la connexion 50 et une résistance 52 se trouve entre l'émetteur du transistor 33' et le conducteur 3'. Le collecteur du transistor 33' est directement relié à la cathode de la diode Zener 19'.

Le fonctionnement du circuit 17' est le même que celui du circuit 17. Le transistor 33' est conducteur lorsque la tension aux bornes du condensateur 5' est inférieure à un seuil déterminé ; le potentiel de l'émetteur de ce transistor 33' est alors positif et ce potentiel positif est transmis à la gâchette 9' du triac 8', ce qui a pour conséquence que ce dernier est conducteur en permanence.

- Bien entendu on pourrait prévoir dans l'exemple de la figure 1 que l'enroulement principal 1 soit d'un seul tenant, le triac étant branché comme dans le cas de la figure 2 entre une extrémité de la phase principale et un conducteur d'alimentation.

En variante la puissance d'alimentation du moteur est asservie à sa vitesse par mesure de cette dernière à l'aide de la tension aux bornes du bobinage auxiliaire 4 au lieu de mesurer la tension aux bornes du condensateur 5.

En variante encore la vitesse est mesurée par l'interposition d'une résistance en série avec le bobinage principal 1 ; cependant cette dernière réalisation est moins avantageuse que les deux précédentes. Un avantage particulier du choix, pour la mesure de la vitesse, de la tension aux bornes du condensateur 5 est que ses bornes sont en général aisément accessibles de l'extérieur.

En variante encore l'asservissement est du type progressif et non par tout ou rien, un signal d'erreur étant fourni à la gâchette du triac (9 ou 9') pour que la vitesse soit exactement celle affichée quel que soit le couple résistant. A cet effet on prévoit un circuit intégré tel que celui de référence L 120 ou L 121 de la société SGS pour commander le temps de conduction (ou angle d'allumage) du thyristor 8'. La vitesse affichée est alors une tension continue appliquée à l'entrée de ce circuit intégré et le signal d'erreur est obtenu par comparaison entre cette tension et celle apparaissant entre la prise 28' et le conducteur 3'. Les condensateurs 24 et 26 et les résistances 21 et 25 constituent alors un intégrateur évitant des variations brusques de la vitesse du moteur qui pourraient le rendre bruyant.

## Revendications

1. Dispositif de commande de la puissance d'alimentation d'un moteur électrique asynchrone monophasé muni d'un bobinage auxiliaire (4) de démarrage en série avec un condensateur (5), l'alimentation étant du type à découpage avec un interrupteur commandé (8), tel qu'un triac, ce dispositif de commande comprenant un moyen pour faire varier le temps de conduction de l'interrupteur (8) en fonction de la vitesse du moteur, caractérisé en ce que pour faire varier le temps de conduction de l'interrupteur, et donc la puissance d'alimentation, en fonction de la vitesse, ledit moyen fait appel à la tension aux bornes du condensateur (5) ou aux bornes du bobinage auxiliaire (4) et agit sur un ensemble constitué d'une résistance (11) en série avec un condensateur (12) dont le point commun (10) entre la résistance et le condensateur est relié, par l'intermédiaire d'un diac (13), à la gâchette (9) de l'interrupteur commandé (8), l'ensemble en série de ce condensateur (12) et de la résistance (11) étant en parallèle sur l'interrupteur (8) et ledit moyen agissant sur la valeur de ladite résistance (11) ou directement sur ladite gâchette (9).

2. Dispositif selon la revendication 1, caractérisé en ce que ledit moyen est monté pour que soit fournie la puissance maximale d'alimentation lorsque la vitesse tombe au-dessous d'un seuil déterminé.

3. Dispositif selon la revendication 2, caractérisé en ce qu'il comprend un moyen de temporisation (21, 23, 24, 25, 26, 32) pour que la puissance maximale soit fournie pendant une durée au moins égale à un temps t prédéterminé.

4. Dispositif selon la revendication 3, caractérisé en ce que la durée t est de l'ordre de quelques secondes.

5. Dispositif selon la revendication 1, caractérisé en ce qu'il comporte un moyen (14, 15) pour court-circuiter la résistance (11) lorsque la puissance maximale d'alimentation est demandée.

6. Dispositif selon la revendication 5, caractérisé en ce que le moyen de court-circuit comporte un interrupteur (15) tel qu'un relais.

7. Dispositif selon la revendication 2, caractérisé en ce qu'il comporte un moyen (27, 28) pour faire varier ledit seuil de vitesse.

8. Dispositif selon la revendication 1, caractérisé en ce que ledit moyen pour faire varier la valeur de la résistance (11) comporte un circuit (17, 17') alimenté en courant continu par des moyens pour redresser et filtrer (18, 20, 19, 35) le courant alternatif alimentant le moteur.

9. Dispositif selon la revendication 1, caractérisé en ce que ladite résistance (11) est variable de façon à permettre l'affichage de plusieurs vitesses.

10. Moteur électrique asynchrone monophasé, caractérisé en ce qu'il comprend un dispositif de commande selon l'une quelconque des revendications 1 à 9.

11. Appareil pour faire circuler l'eau dans les conduits d'une installation de chauffage central comprenant une pompe entraînée par un moteur asynchrone monophasé, caractérisé en ce qu'il comporte un moteur selon la revendication 10.

## Claims

1. Control device for the power supplied to a monophased asynchronous electric motor, provided with an auxiliary starter winding in series with a capacitor 5, the power supply being of the elitting type with a controlled switch 8 such as a triac, this control device comprising means for causing to vary the conduction time of the switch 8 in function of the speed of the motor, characterized in that to vary the conduction time of the switch, and thus the power supply, in function of the speed, the said means use the voltage at the terminals of the capacitor 5 or at the terminals of auxiliary winding 4 and act on an assembly constituted by a resistance 11 in series with a capacitor 12 the common point of which 10 between the resistance and the capacitor is connected, through the intermediary of a diac 13 to the gate or basis 9 of the controlled switch 8, the assembly in series of this capacitor 12 and the resistance 11 being in parallel on the switch 8 and the said means acting on the value of the said resistance 11 or directly on the said gate or basis 9.

2. Device according to claim 1, characterized in that the said means are mounted so that the maximal power is supplied when the speed falls below a determined threshold.

3. Device according to claim 2, characterized in that it comprises temporizing means 21, 23, 24, 25, 26, 32 so that the maximal power is supplied for a duration at least equal to a predetermined time t.

4. Device according to claim 33, characterized in that the duration t is of about several seconds.

5. Device according to claim 1, characterized in that it comprises means 14, 15 for short-circuiting the resistance 11 when the maximal power is required.

6. Device according to claim 5, characterized in that the short-circuiting means comprise a switch 15 such as a relay.

7. Device according to claim 2, characterized in that it comprises means 27, 28 for causing to vary the said speed threshold.

8. Device according to claim 1, characterized in that the said means for varying the value of resistance 11 comprises a circuit 17, 17' supplied in direct current by means for rectifying and filtering 18, 20, 19, 35 the alternating current supplying the motor.

9. Device according to claim 1, characterized in that the said resistance 11 is variable in such a way as to allow display of several speeds.

10. Monophased asynchronous electric motor, characterized in that it comprises a control device according to any one of claims 1 to 9.

11. Apparatus for causing to circulate the water in the pipes of a central heating installation comprising a motor driven by a monophased asynchronous motor, characterized in that it comprises a motor according to claim 10.

**Ansprüche**

1. Steuervorrichtung der Einspeisungsleistung eines asynchronen einphasigen Elektromotors, der mit einer Hilfspulenwicklung (4) zum Anlassen ausgestattet ist, die in Reihe mit einem Kondensator (5) geschaltet ist, wobei die Einspeisung nach der Art des « Ausschneidetyps » mit einem gesteuerten Unterbrecher (8) wie einem Triac, erfolgt, wobei diese Steuervorrichtung ein Mittel umfasst um die Zeit der Leitung des Stroms durch den Unterbrecher (8) in Funktion zu der Geschwindigkeit des Motors varieren zu lassen, dadurch gekennzeichnet, dass, um die Zeit der Leitung des Stroms durch den Unterbrecher und somit die Einspeisungsleistung in Funktion zu der Geschwindigkeit varieren zu lassen, das Mittel die Klemmenspannung des Kondensators (5) oder die Klemmenspannung der Hilfspulenwicklung (4) anruft und auf eine Einheit einwirkt, die aus einem mit einem Kondensator (12) in Reihe geschalteten Widerstand (11) gebildet ist, deren gemeinsamer Punkt (10) zwischen dem Widerstand und Kondensator über einen Diac (13) mit der Basis oder dem Gitter (9) des gesteuerten Unterbrechers (8) verbunden ist, wobei die in Reihe geschaltete Einheit dieses Kondensators (12) und des Widerstands (11) mit dem Unterbrecher (8) parallel geschaltet ist und das Mittel auf den Wert des Widerstands (1) oder direkt auf die Basis oder das Gitter (9) einwirkt.

2. Vorrichtung nach Anspruch 1, dadurch gekennzeichnet, dass das Mittel geschaltet ist, damit maximale Einspeisungsleistung geliefert wird, wenn die Geschwindigkeit unterhalb einen bestimmten Schwellenwert fällt.

3. Vorrichtung nach Anspruch 2, dadurch gekennzeichnet, dass sie ein Verzögerungsmittel (21, 23, 24, 25, 26, 32) umfasst, damit die maximale Leistung während einer wenigstens einer vorherbestimmten Zeit t entsprechenden Dauer geliefert wird.

4. Vorrichtung nach Anspruch 3, dadurch gekennzeichnet, dass die Dauer t sich in der Grössenordnung von einigen Sekunden bewegt.

5. Vorrichtung nach Anspruch 1, dadurch gekennzeichnet, dass sie ein Mittel umfasst um den Widerstand (11) kurzzuschliessen, wenn die maximale Einspeisungsleistung angefragt wird.

6. Vorrichtung nach Anspruch 5, dadurch gekennzeichnet, dass das Kurzschlussmittel einen Unterbrecher (15), wie ein Relais, umfasst.

7. Vorrichtung nach Anspruch 1, dadurch gekennzeichnet, dass er ein Mittel (27, 28) umfasst um die Geschwindigkeitsschwelle varieren zu lassen.

8. Vorrichtung nach Anspruch 1, dadurch gekennzeichnet, dass das Mittel zum Varieren des Wertes des Widerstands (11) einen Schaltkreis (17, 17') umfasst, der mit Gleichstrom durch Mittel zum gleichrichten und filtern (18, 20, 19, 35) des den Motor speisenden Wechselstroms versorgt wird.

9. Vorrichtung nach Anspruch 1, dadurch gekennzeichnet, dass der Widerstand (11) variabel ist, so dass er die Anzeige von mehreren Geschwindigkeiten zulässt.

10. Asynchroner einphasiger Elektromotor, dadurch gekennzeichnet dass er eine Steuervorrichtung nach einem der Ansprüche 1 bis 9 umfasst.

11. Apparat zum Zirkulierenlassen des Wassers in den Leitern einer Zentralheizungsinstallation, die eine von einem asynchronen einphasigen Motor, angetriebene Pumpe umfasst, dadurch gekennzeichnet, dass er einen Motor nach Anspruch 10 umfasst.

FIG_1

0 054 446

FIG_2

0 054 446